# EUROPÄISCHE PATENTSCHRIFT

(11) **EP 4 276 437 B1**
(45) Veröffentlichungstag und Bekanntmachung des Hinweises auf die Patenterteilung: **26.03.2025**
(21) Anmeldenummer: 22173375.1
(22) Anmeldetag: 13.05.2022
(51) Int. Cl.: G01M 17/02

(54) **FELGENVERRIEGELUNG**
RIM LOCKING DEVICE
VERROUILLAGE POUR JANTES

(43) Veröffentlichungstag der Anmeldung: 15.11.2023
(73) Patentinhaber: Hofmann Maschinen- und Anlagenbau GmbH, 67550 Worms (DE)
(72) Erfinder: AUMANN, Stephan, 67551 Worms (DE); FURCHTBAR, Felix, 67591 Westhofen (DE)
(74) Vertreter: Tergau & Walkenhorst Intellectual Property GmbH

(56) Entgegenhaltungen:
- DE-T2- 69 102 316
- US-A- 6 089 084
- US-B2- 9 321 315

## Beschreibung

Die Erfindung betrifft eine Felgenverriegelung für eine Messvorrichtung zur Vermessung eines Reifens, insbesondere eines Kraftfahrzeugreifens, und zwar insbesondere hinsichtlich Geometrie, Gleichförmigkeit und/oder Unwucht. Sie betrifft weiterhin eine zugehörige Anlage und ein Betriebsverfahren.

Aus der EP 0 897 107 A2 ist eine auch als Messstand bezeichnete Vorrichtung zur Vermessung eines Reifens bekannt. Diese und ähnliche Anlagen sind üblicherweise für den Einsatz bei Reifenherstellern für Personenkraftwagen und (Leicht-) Lastkraftwagen konzipiert. Schwerpunktmäßig werden auf einer derartigen Anlage die Vermessung hinsichtlich Geometrie, Gleichförmigkeit sowie auch das Auswuchten des Reifens vollzogen. Im Anschluss können in nachgeschalteten Anlagenkomponenten wichtige Markierpunkte mit Hilfe einer Markierstation gesetzt und die geprüften und markierten Reifen durch einen Hubsortierer oder dergleichen ausgeschleust werden.

Aus der US 6 089 084 A ist eine Prüfvorrichtung zum Prüfen eines Reifens bekannt. Die Prüfvorrichtung umfasst untere und obere Testfelgen die mit Hilfe von Klemmvorrichtungen gehalten werden.

Für den Messvorgang wird der jeweilige Reifen in einer sogenannten Messfelge eingespannt oder gelagert, die an einer Messaufnahme der Messvorrichtung arretiert ist und sich aus einer oberen und einer unteren Felgenhälfte zusammensetzt. Wenn der Reifen im Messstand über die Fördertechnik eingefördert wurde, wird die obere Felgenhälfte und die untere Felgenhälfte im jeweiligen Reifenwulst positioniert, verriegelt und der Reifen mit Druckluft befüllt. Nach dem Messvorgang wird das so temporär gebildete Rad entlüftet und die Felgenhälften werden wieder auseinander gefahren. Der Reifen wird danach weitertransportiert.

Die bekannten Anlagen können je nach Ausführung Reifen unterschiedlicher Größen vermessen bzw. bearbeiten, typischerweise von 12" bis 28" (Zoll). Hierzu werden in ihrer Größe entsprechend abgestimmte Messfelgen benötigt. Für einen Felgenwechsel bedarf es eines Umbaus, der bislang händisch mit Hilfswerkzeugen vollzogen wird, personalintensiv und körperlich anstrengend ist und verhältnismäßig lange Rüstzeiten in Anspruch nimmt. Es besteht daher Bedarf für eine automatisierte Lösung, mit der der Wechsel der Messfelgen in kurzer Zeit vollzogen werden kann. Dabei bedarf es insbesondere einer Felgenverriegelung, die die gewünschte Automatisierung in geeigneter Weise unterstützt.

Aufgabe der Erfindung ist es, eine Felgenverriegelung für den Einsatz in einer Messvorrichtung zur Vermessung eines Reifens, insbesondere eines Kraftfahrzeugreifens, bereitzustellen, die einen automatisierten Wechsel von Messfelgen unterstützt. Die Felgenverriegelung soll einfach und kostengünstig herzustellen sein und zuverlässig und wartungsarm funktionieren. Des Weiteren soll ein zugehöriges Betriebsverfahren angegeben werden.

Die auf die Vorrichtung bezogene Aufgabe wird erfindungsgemäß gelöst durch eine Felgenverriegelung mit den Merkmalen des Anspruchs 1.

Demnach ist eine Felgenverriegelungsvorrichtung oder kurz Felgenverriegelung vorgesehen für eine Messvorrichtung zur Vermessung eines Reifens, insbesondere eines Kraftfahrzeugreifens, und zwar insbesondere hinsichtlich Geometrie, Gleichförmigkeit und/oder Unwucht, mit einer an einem heb- und senkbaren Zubringer befestigten oberen Verriegelungseinheit für eine obere Felgenhälfte und mit einer mit einem Rotations- oder Drehantrieb, insbesondere mit einem Torquemotor, verbundenen oder verbindbaren unteren Verriegelungseinheit für eine untere Felgenhälfte, wobei die obere Verriegelungseinheit und die untere Verriegelungseinheit unabhängig voneinander betätigbar sind, wobei die obere Verriegelungseinheit ein gegenüber einem Grundrohr verdrehbares Verriegelungsrohr aufweist, und wobei beim Verdrehen des Verriegelungsrohres eine Anzahl von Klemmelementen von einer Entriegelungsposition in eine Verriegelungsposition oder umgekehrt zum Ver- oder Entriegeln der zugeordneten Felgenhälfte bewegbar ist.

Das Verriegelungsrohr kann auch als Verriegelungsring bezeichnet werden. Es sitzt bevorzugt in konzentrischer Anordnung außen auf dem Grundrohr.

Die Erfindung stellt bei einfach gehaltener Konstruktion eine zuverlässige und einfach ansteuerbare Automatisierungslösung für den Wechsel der Messfelgen und das Einspannen der zu vermessenden Reifen bereit. Dadurch dass die Felgenhälften sowohl separat als auch als miteinander verbundene Einheit gehandhabt werden können, ist eine besonders flexible und effiziente Prozessführung mit einem Minimum an manueller Interaktion ermöglicht.

Vorteilhafterweise ist das jeweilige Klemmelement derart beschaffen, dass es in der Verriegelungsposition nach außen gegen eine auf das Grundrohr aufbringbare oder auf ihm sitzende Felgenhälfte drückt und diese dadurch verriegelt. Eine symmetrische Kraftverteilung wird erreicht, indem über den Umfang des Verriegelungsrohres hinweg eine Mehrzahl von Klemmelementen verteilt ist.

In bevorzugter Ausgestaltung ist das jeweilige Klemmelement eine Kugel, die - vorzugsweise in einem Kugelkäfig - auf einer in ihrer radialen Ausdehnung variierenden Abrollfläche des Verriegelungsrohres abrollt, wobei die Entriegelungsposition einem radial abgesenkten Zustand und die Verriegelungsposition einem radial hervorstehenden Zustand der Kugel entspricht.

Ferner ist es vorteilhaft, wenn vom Verriegelungsrohr mindestens ein Betätigungselement, insbesondere ein Bolzen, radial nach außen absteht, das zur Wechselwirkung mit einer Abwurfschräge an einer der Felgenhälften vorgesehen ist, um diese bei der Entriegelung abzuwerfen. Damit wird das Abwerfen einer vergleichsweise fest auf dem Grundrohr sitzenden Felgenhälfte aktiv unterstützt.

Zur Verdrehung des Verriegelungsrohres kann ein Elektromotor vorgesehen sein. Besonders vorteilhaft ist es jedoch, wenn das Verriegelungsrohr durch einen an einem Anlenkhebel angreifenden Hydraulikzylinder oder einen Pneumatikzylinder gegenüber dem Grundrohr verdrehbar ist. Alternativ kann das Drehen auch manuell mittels entsprechender Griffe, die am Verriegelungsrohr angebracht sind, erfolgen.

Weiterhin ist es vorteilhaft, wenn die untere Verriegelungseinheit einen Verriegelungsmechanismus aufweist, der strukturell gleichartig und funktionsgleich zum Verriegelungsmechanismus der oberen Verriegelungseinheit ist. Das heißt, auch die untere Verriegelungseinheit weist vorteilhafterweise ein gegenüber einem Grundrohr verdrehbares Verriegelungsrohr auf, wobei beim Drehen des Verriegelungsrohres eine Anzahl von Klemmelementen von einer Entriegelungsposition in eine Verriegelungsposition oder umgekehrt zum Ver- oder Entriegeln der zugeordneten Felgenhälfte bewegbar ist.

Des Weiteren ist es zweckmäßig, wenn die untere Felgenhälfte nach dem Prinzip einer Bajonettverbindung mit der oberen Felgenhälfte zu einer Einheit verriegelbar ist.

Wenn der Zubringer in zumindest einer horizontalen Richtung verfahrbar ist, kann er eine Messfelge vom Messstand zu einem zugeordneten Felgenmagazin und zurück verfahren.

Die Erfindung stellt weiterhin eine Anlage bereit mit einer Messvorrichtung zur Vermessung eines Reifens, insbesondere eines Kraftfahrzeugreifens, hinsichtlich Geometrie, Gleichförmigkeit und/oder Unwucht, mit einem Zubringer für aus Felgenhälften zusammensetzbare Messfelgen und mit einer Felgenverriegelung.

In bevorzugter Ausgestaltung weist die Anlage ferner ein Felgenmagazin auf, und der Zubringer ist zum Transport von Messfelgen vom Felgenmagazin zur Messvorrichtung und zurück ausgelegt.

In verfahrenshafter Sprache stellt die Erfindung ein Verfahren zum Betreiben einer Vorrichtung oder Anlage der genannten Art bereit, wobei eine Felgenhälfte auf das zugeordnete Grundrohr aufgebracht wird und zur Verriegelung das Verriegelungsrohr so weit gedreht wird, dass sich das jeweilige Klemmelement von einer Entriegelungsposition in eine Verriegelungsposition bewegt.

Vorteilhafterweise lassen sich die obere und die untere Felgenhälfte durch eine kombinierte Steck-Dreh-Bewegung relativ zueinander miteinander zu einer Einheit verriegeln oder entriegeln. Die Steckbewegung erfolgt dabei vorteilhafterweise durch Heben oder Senken des Zubringers, und die Drehbewegung erfolgt bevorzug durch den der unteren Verriegelungseinheit zugeordneten Rotations- oder Drehantrieb.

Ein Ausführungsbeispiel der Erfindung wird nachfolgend anhand der beigefügten Zeichnungen näher erläutert. Es zeigt:
- FIG. 1: in perspektivischer Ansicht einen mit einer oberen Verriegelungseinheit ausgestatteten Zubringer für eine obere Messfelgenhälfte, der über einer unteren Verriegelungseinheit für eine untere Messfelgenhälfte angeordnet ist, wobei beide Verriegelungseinheiten zusammen eine Felgenverriegelung, insbesondere in einem Messstand für einen zwischen den beiden Felgenhälften eingespannten Reifen, bilden,
- FIG. 2: einen Längsschnitt durch die Felgenverriegelung gemäß FIG. 1, hier mit einem Paar von arretierten Messfelgenhälften,
- FIG. 3: eine Detailansicht eines Verriegelungsrohres der Felgenverriegelung, hier mit abgenommener Messfelgenhälfte,
- FIG. 4: eine weitere Detailansicht des Verriegelungsrohres, hier mit (noch) arretierter Messfelgenhälfte,
- FIG. 5: einen Schnitt durch zwei miteinander mittels eines Bajonettverschlusses gepaarte Messfelgenhälften, links vor der Verriegelung und rechts nach der Verriegelung des Bajonettverschlusses, und
- FIG. 6: Detailausschnitte zweier verschiedener Schnitte durch eine Verrieglungseinheit mit verriegelter Felgenhälfte.

Gleiche Teile sind in allen Figuren mit denselben Bezugszeichen versehen.

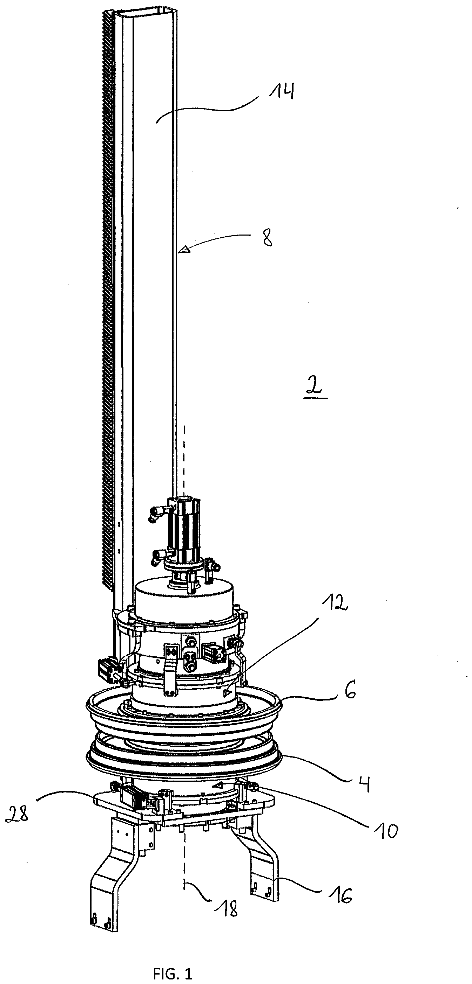

Die in FIG. 1 in perspektivischer Ansicht dargestellte Felgenverriegelung 2 ist Bestandteil einer Anlage zur automatisierten Vermessung von Reifen, insbesondere Kraftfahrzeugreifen, und zwar insbesondere hinsichtlich Geometrie, Gleichförmigkeit und/oder Unwucht. Zum Vermessen wird der Reifen in horizontaler (liegender) Ausrichtung, also mit vertikaler Drehachse, zwischen einem Paar von drehbar gelagerten Messfelgenhälften oder kurz Felgenhälften 4, 6 eingespannt, mit Druckluft befüllt und in Rotation versetzt. Die untere Felgenhälfte 4 ist dazu typischerweise mit einem Drehlager eines Drehantriebs, insbesondere eines Direktantriebs, verbunden oder verbindbar bzw. koppelbar. Die obere Felgenhälfte 6 hingegen ist derart an einem verfahrbaren Zubringer 8 montiert, dass sie sich zum Reifenwechsel von der unteren Felgenhälfte 4 abheben lässt. Die beiden Felgenhälften 4, 6 zusammen werden auch als Messfelge bezeichnet. Da unterschiedliche Reifengrößen in der Regel unterschiedliche Felgengrößen benötigen, ist weiterhin durch die Felgenverriegelung 2 und zugehörige Transportmittel eine Möglichkeit zum Wechseln der Felgenhälften 4, 6 geschaffen. Der Zubringer 8 ist dabei Bestandteil eines nicht näher dargestellten Ladeportals und derart konstruiert, dass er die beiden Felgenhälften 4, 6 in einem miteinander verriegelten Zustand als Einheit zu einem zugeordneten Felgenmagazin transportieren, dort ablegen und gegen eine neue Messfelge austauschen kann. Die neue Messfelge wird mit Hilfe des Zubringers 8 zum Messstand transportiert und dort zur Durchführung der gewünschten Messungen mit dem Drehantrieb gekoppelt, wobei zwischen den Felgenhälften 4, 6 der zu vermessende Reifen eingespannt wird.

Die eigentliche Messvorrichtung, auch als Messstand bezeichnet, zur Vermessung des Reifens kann ähnlich wie die in EP 0 897 107 A2 beschriebene Messvorrichtung aufgebaut sein.

Die in FIG. 1 dargestellte Felgenverriegelung 2 ist demnach in eine untere Verriegelungseinheit 10 und eine obere Verriegelungseinheit 12 aufgeteilt. Jede dieser Einheiten verriegelt jeweils eine Felgenhälfte 4, 6. Die obere Verriegelungseinheit 12 ist das Bindeglied zwischen dem Zubringer 8 und der oberen Felgenhälfte 6.

Hier im Beispiel umfasst der Zubringer 8 einen vertikal ausgerichteten Pfosten 14, der mit Hilfe eines hier nicht dargestellten Antriebsmechanismus eine vertikale Hub- oder Senkbewegung ausführen kann und zudem lateral (in einer horizontalen Ebene) in zumindest einer horizontalen Richtung verfahrbar ist, um den Transportweg zwischen Messestand und Felgenmagazin zu bewerkstelligen. Die untere Felgenhälfte 4 ist von der unteren Verriegelungseinheit 10 aufgenommen, die als Bindeglied zu einem mit der unteren Felgenhälfte 4 koppelbaren Drehantrieb dient. Der hier nicht dargestellte Drehantrieb des Messstandes kann insbesondere einen Torquemotor aufweisen, der zweckmäßigerweise unterhalb der unteren Verriegelungseinheit 10 angeordnet ist. Die untere Verriegelungseinheit 10 weist eine Grundplatte 28 auf, die über Verbindungselemente 16 fest mit dem hier nicht dargestellten Maschinengrundrahmen des Messstandes verbunden ist. Diese untere Einheit ist somit stationär und kann nicht vertikal oder horizontal verfahren werden. Die untere Felgenhälfte 4 kann sich aber wie bereits erwähnt, durch den Drehantrieb angetrieben, um die vertikal ausgerichtete Drehachse 18 drehen und dadurch im Messbetrieb einen in der Messfelge eingespannten Reifen mitdrehen. Die obere und untere Felgenhälfte 4, 6 können unabhängig voneinander verriegelt und entriegelt werden. Dies ist vorteilhaft, um die Felgen beim Felgenwechsel paarweise ein und ausbauen zu können, wie weiter unten beschrieben.

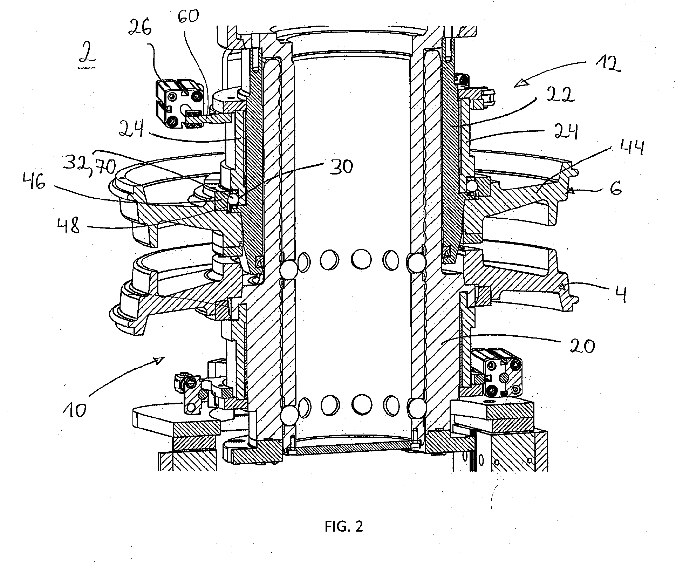

Die obere und die untere Verriegelungseinheit 10, 12 weisen jeweils ein Grundrohr 20, 22 auf, an dem der Verriegelungsmechanismus für die zugehörige Felgenhälfte 4, 6 angeordnet ist. Zum Wechsel des Reifens und der Messfelge lässt sich die obere Verriegelungseinheit 12 wie bereits erwähnt mit Hilfe des Zubringers 8 von der unteren Verriegelungseinheit 10 abheben. Zum Messbetrieb hingegen wird die obere Verriegelungseinheit 12 auf die untere Verriegelungseinheit 10 abgesenkt und umschließt diese dabei zumindest teilweise nach der Art konzentrischer Rohre, wie aus der Schnittdarstellung gemäß FIG. 2 hervorgeht. Die obere Felgenhälfte 6 wird dabei rotatorisch vom Zubringer 8 entkoppelt, kann also mit der unteren Felgenhälfte 4 und dem Reifen mitdrehen. Analog wird die untere Felgenhälfte 6 rotatorisch von der Grundplatte 28 getrennt bzw. entkoppelt. Der Antrieb erfolgt über den auf die untere Verriegelungseinheit 10 und somit die untere Felgenhälfte 4 einwirkenden Drehantrieb. Dazu ist beispielsweise das untere Grundrohr 20 über einen Verbindungsflansch mit einem Torquemotor gekoppelt oder koppelbar. Eine im Inneren der beiden Grundrohre 20, 22 angeordnete, hier nicht näher dargestellte Spanneinrichtung spannt während des Messbetriebs unter Einhaltung des für die jeweiligen Reifengröße erforderlichen Axialabstands die obere Felgenhälfte 6 gegen die untere Felgenhälfte 4. Auf die Details der Verspannung kommt es jedoch vorliegend nicht an.

In Bezug auf den Verriegelungsmechanismus und dessen Funktionsweise sind die untere und die obere Verriegelungseinheit 10, 12 im Wesentlichen gleichartig aufgebaut, so dass es genügt, die obere Verriegelungseinheit 12 diesbezüglich genauer zu betrachten. Für die untere Verriegelungseinheit 10 gilt Entsprechendes in spiegelbildliche Anordnung.

Zentraler Bestandteil des Verriegelungsmechanismus ist ein das Grundrohr 22 der Verriegelungseinheit 12 konzentrisch umgebendes Verriegelungsrohr 24, das eng anliegend aber spielbehaftet auf dem Grundrohr 22 sitzt und gegenüber diesem verdrehbar ist. In Axialrichtung gesehen erstreckt sich das Verriegelungsrohr 24 nur über einen Teilbereich des Grundrohres 22 und sitzt insbesondere oberhalb der zur verriegelnden Felgenhälfte 6. Die Betätigung des Verriegelungsrohres 24 erfolgt vorzugsweise pneumatisch über zumindest einen, bevorzugt zwei, beidseitig angebrachte Betätigungszylinder 26, die sich im Fall der oberen Verriegelungseinheit 12 am Zubringer 8 abstützen, im Fall der unteren Verriegelungseinheit 10 an einer starr mit dem Maschinengrundrahmen verbundenen Grundplatte 28. An dem dem Verriegelungsrohr 24 zugewandten Ende greift der jeweilige Betätigungszylinder 26 über einen mit dem Verriegelungsrohr 24 verbundenen, radial nach außen abstehenden Anlenkhebel 60 an. Die Linearbewegung der Betätigungszylinder 26 wird somit in eine Drehbewegung des Verriegelungsrohrs 24 umgewandelt.

Genauer gesagt ist der Anlenkhebel 60 zwar während der Ver- und Entriegelungsvorgänge mit dem Verriegelungsrohr 24 verbunden, um die Linearbewegung der Betätigungszylinder 26 in eine Drehbewegung des Verrieglungsrohres 24 umzusetzen bzw. zu übertragen, kann und muss allerdings im Messbetrieb entkoppelt werden, da die Pneumatik- oder Hydraulikzylinder nicht mitdrehen. Die Entkopplung findet oben statt, indem der Zubringer 8 mit dem daran befestigten Betätigungszylinder 26 ein Stück nach unten fährt. Unten wiederum wird die Grundplatte 28 mitsamt dem sich an ihr abstützenden Betätigungszylinder ein Stück nach oben angehoben. Hierzu ist zwischen dem Unterteil mit den Verbindungselementen 16 und der Grundplatte 28 beidseitig jeweils ein weiterer Hubzylinder enthalten. Auf die Details dieser mit dem Übergang zum/vom Messbetrieb zusammenhängenden rotatorischen Kopplungs- und Entkopplungsmechanismen kommt es nachfolgend aber nicht an.

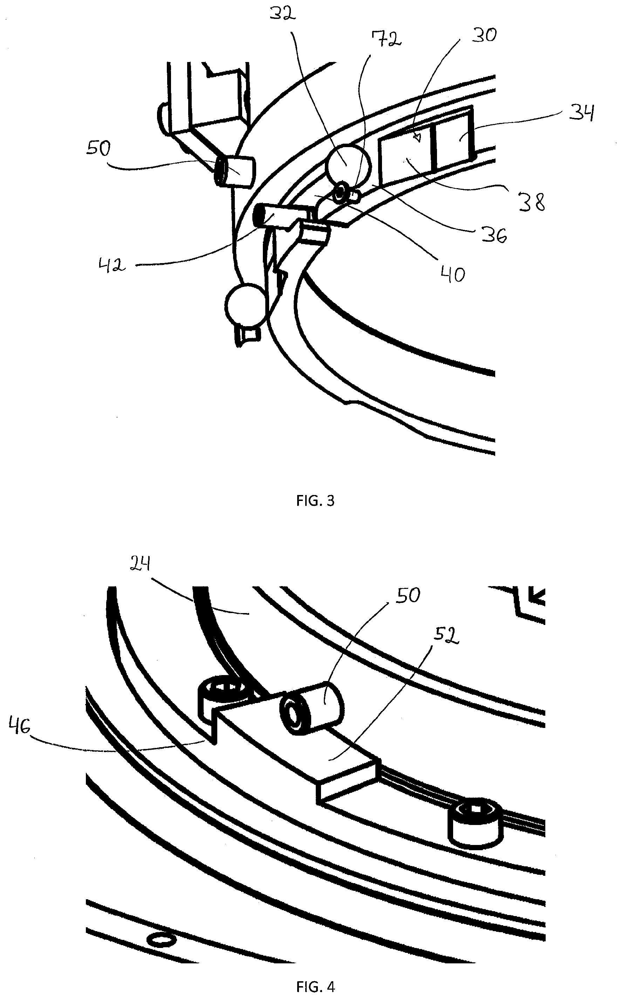

Am Außenumfang des Verriegelungsrohres 24 ist gemäß FIG. 3 in einem Umfangsabschnitt eine rillen- oder spurförmige Abrollfläche 30 für eine Kugel 32 mit einer taschenartigen Vertiefung 34 oder Tasche, einer podestartigen Erhöhung 36 und einer dazwischen liegenden Schräge 38 angeordnet. Der Umfangsabschnitt entspricht dem durch den Betätigungszylinder 26 realisierbaren Drehwinkel des Verriegelungsrohres 24. Bei der Drehung des Verriegelungsrohres 24 sitzt die Kugel 32 relativ zum Umfang des Grundrohres 22 ortsfest in einem durch eine Radialbohrung im oberen Grundrohr 22 ausgebildeten Kugelkäfig und rollt dabei auf der Abrollfläche 30 ab. Durch die relative Drehbewegung zwischen Grundrohr 22 und Verriegelungsrohr 24 wird die Kugel 32 von einer in Radialrichtung abgesenkten Entriegelungsposition in der Tasche oder Vertiefung 34 über die Schräge 38 in eine radial nach außen angehobene Verriegelungsposition auf dem Podest oder der Erhöhung 36 befördert und umgekehrt. Ein in eine schlitzförmige Aussparung 40 des Verriegelungsrohres 24 greifender, am Grundrohr 22 fixierter und radial vorspringender Bolzen 42 wirkt dabei in Kombination mit der Aussparung 40 als Endanschlag und begrenzt den Drehwinkel des Verriegelungsrohres 24 auf den gewünschten Umfangsbereich, so dass unabhängig von der erzielbaren Genauigkeit der Endanschläge der Betätigungszylinder 26 feste Positionen angefahren werden.

Über den Umfang verteilt können mehrere der beschriebenen Kugeln 32 und dazu korrespondierende Abrollflächen 30 angeordnet sein, so dass eine simultane Ansteuerung bei der Drehung des Verriegelungsrohres 24 erfolgt. Dadurch wird die in der Verriegelungsposition durch die Kugeln 32 weitergeleitete Anpresskraft (siehe unten) auf die zugehörige Felgenhälfte 6 gleichmäßig auf den Ringumfang verteilt.

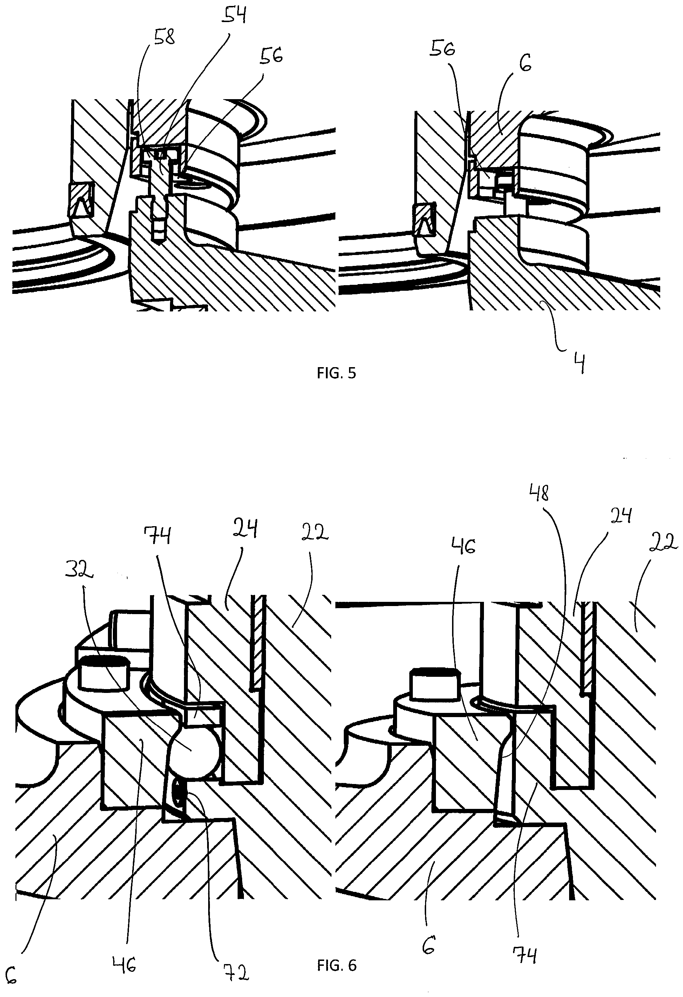

Die obere Felgenhälfte 6 sitzt mit ihrem Felgengrundkörper 44 im verriegelten Zustand am unteren Ende des Grundrohres 22 der oberen Verriegelungseinheit 12 und stützt sich auf dessen Außenumfang ab. Ein sich am Innenumfang der Felgenhälfte 6 nach oben erststreckender Klemmring 46 ist zur Wechselwirkung mit den oben beschriebenen Kugeln 32 vorgesehen. Der Klemmring 46 kann ein integraler Bestandteil der oberen Felgenhälfte 6 (und analog bei der unteren Felgenhälfte 4) sein. Bevorzugt ist er jedoch ein separates Bauteil, das mit dem Felgengrundkörper 44 beispielsweise durch Verschraubung lösbar verbunden ist. Der Klemmring 46 weist eine Innenfläche 48 auf, die der Außenfläche des Verriegelungsrohres 24 und den darauf gelagerten Kugeln 32 zugewandt ist. Ein zwischen dem Klemmring 46 und dem Grundrohr 22 bestehender Spalt (siehe auch FIG. 6 mit den zugehörigen Anmerkungen weiter unten) ist derart bemessen, dass die Felgenhälfte 6 in der versenkten Entriegelungsposition der Kugeln 32 nach unten vom Grundrohr 22 der Verriegelungseinheit 12 abnehmbar oder von unten aufschiebbar ist. Eine kegelartige Abschrägung oder Verjüngung des Grundrohres 22 am unteren Ende erleichtert das selbstzentrierende Aufschieben der Felgenhälfte 6 bei der Montage bis in ihre durch einen Vorsprung 74 am Grundrohr 22 definierte Endlage.

FIG. 6 verdeutlicht den beschriebenen Sachverhalt anhand verschiedener Schnitte durch die obere Verriegelungseinheit 12. In der rechten Darstellung kann man erkennen, wie das Verriegelungsrohr 24 im unteren Bereich vom Grundrohr 22 umhüllt wird. Anders ausgedrückt weist das Grundrohr 22 umfänglich einen nach oben hin offenen Vorsprung 74 oder Kragen auf, in dem der untere Abschnitt des Verriegelungsrohrs 24 gleitend gelagert ist. Der Vorsprung 74 umschließt in diesem Bereich das Verriegelungsrohr 24. An einer ausgewählten Umfangsposition ist eine Radialbohrung oder Führungsbohrung in den Vorsprung 74 eingebracht, die einen Kugelkäfig für die Kugel 32 bildet. In dem Kugelkäfig ist die Kugel 32 relativ zum Grundrohr 22 in Umfangsrichtung sowie nach oben unten fixiert, kann sich aber radial bewegen, wobei eine Ansteuerung der radialen Bewegung wie beschrieben durch die an der Außenseite des Verriegelungsrohres 24 ausgebildete Abrollfläche 30 erfolgt. Die linke Darstellung in FIG. 6 zeigt einen Schnitt in einer Ebene durch die Führungsbohrung. Eine auch in FIG. 3 erkennbare, von außen in den Vorsprung 74 geschraubte und leicht in die Öffnung der Führungsbohrung hineinragende Fixierschraube 72 verhindert das Herausfallen der Kugel 32 aus der Führungsbohrung bei abgenommener obere Felgenhälfte 6.

Die separate Ausführung des Klemmrings 46 und lösbare Befestigung am Felgengrundkörper 44 beispielsweise durch Verschraubung hat den Vorteil, dass bei verklemmtem Verriegelungsmechanismus die Felgenhälfte 4 oder 6 dennoch vergleichsweise einfach durch Lösen der Verschraubung von der Maschine gelöst werden kann und der Verriegelungsmechanismus dadurch zugänglich wird. Darüber hinaus kann der Klemmring 46 damit auch als Adapter wirken.

Nach dem Aufziehen der Felgenhälfte 6 wird wie beschrieben durch Beaufschlagen des Betätigungszylinders 26 das Verriegelungsrohr 24 so weit gedreht, dass die Kugeln 32 radial nach außen gepresst werden. Die jeweils ausgesteuerte Kugel 32 drückt von innen nach außen an den Klemmring 46 der nach Art einer Stufenfelge ausgebildeten Felgenhälfte 6. Die jeweilige Kugel 32 wirkt somit als Klemmelement 70. Die Felgenhälfte 6 ist somit fixiert. Sie kann nicht mehr in Axialrichtung aus der Aufnahme entnommen werden, da die Kugeln 32 dies verhindern. Gleichzeitig wird durch geeignet angeschrägte Konturierung der Innenfläche 48 (siehe auch FIG. 6) des Klemmrings 46 die Felgenhälfte 6 in Axialrichtung nach oben gezogen und in den Sitz gepresst.

Der Entriegelungsvorgang findet in umgekehrter Reihenfolge statt. Das Verriegelungsrohr 24 wird um den vorgegebenen Drehwinkel zurückgedreht. Die eingebrachte Tasche oder Vertiefung 34 im Verriegelungsrohr 24 wird in Umfangsrichtung auf die Position der Kugel 32 gedreht. Dadurch ist die Kugel 32 radial freigängig. Die Felgenhälfte 6 kann aus ihrem Sitz gleiten und drückt durch die gegebene Kontur im Klemmring 46 die jeweilige Kugel 32 in die ihr zugeordnete Vertiefung 34.

Das Lösen einer möglicherweise festsitzenden Felgenhälfte 6 wird aktiv unterstützt. Beim Drehen des Verriegelungsrohres 24 in Richtung Entriegelungsstellung drückt, wie in FIG. 4 dargestellt, ein radial vom Verriegelungsrohr 24 nach außen abstehender und mit ihm fest verbundener Bolzen 50 von oben auf eine an der Oberseite des Klemmrings 46 ausgebildete Abdrück- oder Abwurfschräge 52. Dadurch erfährt die obere Felgenhälfte 6 eine nach unten gerichtete Ausstoßkraft. Somit wird die Felgenhälfte 6 zuverlässig aus der Verriegelungseinheit 12 ausgestoßen.

Ein strukturell gleichartiger und gleichwirkender Mechanismus ist wie bereits erwähnt in spiegelbildlicher Anordnung an der unteren Verriegelungseinheit 10 verwirklicht, auf/von deren Grundrohr 20 die untere Felgenhälfte 4 beim Wechsel von oben aufgezogen bzw. nach oben abgenommen wird.

Durch die getrennte Ansteuerung der unteren und der oberen Verriegelungseinheit 10, 12 ist es möglich, die beiden Felgenhälften 4, 6 wie weiter unten beschrieben miteinander zu einer Einheit zu verriegeln. Dann kann die untere Felgenhälfte 4 nach dem Messvorgang in der unteren Verriegelungseinheit 10 entriegelt werden, während die obere Felgenhälfte 6 in der oberen Verriegelungseinheit 12 verriegelt bleibt. Durch eine vertikale Hubbewegung und anschließendes seitliches Verfahren des Zubringers 8 kann die komplette Messfelge von der unteren Verriegelungseinheit 10 und somit vom Drehlager bzw. Drehantrieb, insbesondere Torquemotor, des Messstands gelöst und zu einem zugeordneten Felgenmagazin gefahren werden. Dort wird die Messfelge von der oberen Verriegelungseinheit 12 gelöst und in eine Magazinaufnahme abgelegt. In entsprechender Weise wird eine neue Messfelge, die sich aus einer oberen Felgenhälfte 6 und einer mit ihr verriegelten unteren Felgenhälfte 4 zusammensetzt, von der am Zubringer 8 angeordneten oberen Verriegelungseinheit 12 gegriffen und verriegelt und dann zum Messstand transportiert. Dort wird die Messfelge mit der unteren Verriegelungseinheit 10 verriegelt, in die beiden Felgenhälften 4, 6 separiert, der zu vermessende Reifen eingefördert und zwischen den beiden Felgenhälften 4, 6 eingespannt. In diesem Zustand schließlich kann die eigentliche Messung erfolgen. Anschließend wiederholen sich die Vorgänge vollständig oder teilweise, je nachdem, ob nur der Reifen oder auch die Messfelge gewechselt werden muss.

Eine alternativ vorgesehene manuelle Felgenverriegelung erfolgt funktionsgleich zur automatischen Felgenverriegelung. Einziger Unterschied ist die Betätigung des Verriegelungsmechanismus. Wird diese bei der automatischen Felgenverriegelung mit den Pneumatik- bzw. Betätigungszylindern 26 ausgeführt, so findet dies bei der manuellen Felgenverriegelung durch manuelle Betätigung statt. Diese Aufgabe übernimmt das Bedienpersonal der Maschine. Statt der Betätigungszylinder 26 befinden sich zwei Handgriffe an dieser Stelle, über die die Drehbewegung des Verriegelungsrohres 24 eingeleitet werden kann. Eine derartige manuelle Felgenverriegelung kann auch zusätzlich (ersatzweise) zu der Betätigung mit den Betätigungszylindern 26 vorhanden sein, sofern die Möglichkeit besteht, die Betätigungszylinder 26 auf Freilauf umzuschalten.

Für den Felgenwechsel werden wie bereits erwähnt die untere und obere Felgenhälfte 4, 6 zueinander fixiert bzw. miteinander verriegelt. Somit werden letztendlich beide Felgenhälften 4, 6 gleichzeitig als ein Felgenpaar bzw. eine komplette Messfelge aus der Maschine ausgebaut und eingelagert bzw. gewechselt. Um eine derartige Verriegelung miteinander zu ermöglichen, sind die Felgenhälften 4, 6 mit Verbindungselementen versehen, die bevorzugt nach Art eines Bajonettverschlusses ausgebildet sind, sich also durch eine kombinierte Steck-Dreh-Bewegung miteinander arretieren lassen. Wie in FIG. 5 dargestellt, kann beispielsweise an einer der Felgenhälften 4 oder 6 ein zu der anderen Felgenhälfte 6 oder 4 weisender Kopfbolzen oder eine Bundschraube 54 fixiert sein und hervorstehen, während die andere Felgenhälfte 6 oder 4 eine dazu korrespondierende Aufnahme 56 aufweisen kann, die in Arretierstellung den Kopf 58 des Kopfbolzens oder der Bundschraube 54 hintergreift und damit formschlüssig sichert.

FIG. 5 illustriert den Vorgang der Felgenpaarung: Hierzu fährt die obere Felgenhälfte 6 in Abholposition der unteren Felgenhälfte 4. Anschließend wird die untere Felgenhälfte 4 verdreht, bis der Bajonettverschluss verriegelt ist. Die Felgenhälften 4, 6 sind nun gepaart. Die untere Felgenhälfte 4 kann daraufhin in der unteren Verriegelungseinheit 10 entriegelt werden und durch Hochfahren des Zubringers 8 wird die komplette Messfelge aus der Maschine entnommen. Das Verdrehen der unteren Felgenhälfte 4 kann durch den Drehantrieb erfolgen, auf der die untere Verriegelungseinheit 10 gelagert ist. Das heißt, derselbe Motor bzw. Antrieb, der die Rotation des eingespannten Reifens während der Messung bewirkt, wird zweckmäßigerweise auch zur Betätigung des Bajonettverschlusses bei der Felgenpaarung oder -separation verwendet.

Denkbar ist es auch, dass der Zubringer 8 nur die Hub- und Senkfunktion aufweist, aber nicht horizontal verfahrbar ist. Dann kann der Zubringer 8 zwar nicht für den Transport der Messfelge zwischen Messstand und Felgenmagazin verwendet werden, wohl aber für die anderen beschriebenen, die Ver- und Entriegelung betreffenden Funktionen.

### Bezugszeichenliste

- 2: Felgenverriegelung
- 4: untere Felgenhälfte
- 6: obere Felgenhälfte
- 8: Zubringer
- 10: untere Verriegelungseinheit
- 12: obere Verriegelungseinheit
- 14: Pfosten
- 16: Verbindungselement
- 18: Drehachse
- 20: unteres Grundrohr
- 22: oberes Grundrohr
- 24: Verriegelungsrohr
- 26: Betätigungszylinder
- 28: Grundplatte
- 30: Abrollfläche
- 32: Kugel
- 34: Vertiefung
- 36: Erhöhung
- 38: Schräge
- 40: Aussparung
- 42: Bolzen
- 44: Felgengrundkörper
- 46: Klemmring
- 48: Innenfläche
- 50: Bolzen
- 52: Abwurfschräge
- 54: Bundschraube
- 56: Aufnahme
- 58: Kopf
- 60: Anlenkhebel
- 70: Klemmelement
- 72: Fixierschraube
- 74: Vorsprung

## Patentansprüche

1. Felgenverriegelung (2) für eine Messvorrichtung zur Vermessung eines Reifens, insbesondere eines Kraftfahrzeugreifens, und zwar insbesondere hinsichtlich Geometrie, Gleichförmigkeit und/oder Unwucht, mit einer an einem heb- und senkbaren Zubringer (8) befestigten oberen Verriegelungseinheit (12) für eine obere Felgenhälfte (6) und mit einer mit einem Drehantrieb, insbesondere mit einem Torquemotor, verbundenen oder koppelbaren unteren Verriegelungseinheit (10) für eine untere Felgenhälfte (4), wobei die obere Verriegelungseinheit (12) und die untere Verriegelungseinheit (10) unabhängig voneinander betätigbar sind, wobei die obere Verriegelungseinheit (12) ein gegenüber einem Grundrohr (22) verdrehbares Verriegelungsrohr (24) aufweist, und wobei beim Drehen des Verriegelungsrohres (24) eine Anzahl von Klemmelementen (70) von einer Entriegelungsposition in eine Verriegelungsposition oder umgekehrt zum Ver- oder Entriegeln der zugeordneten Felgenhälfte (6) bewegbar ist.

2. Felgenverriegelung (2) nach Anspruch 1, wobei das jeweilige Klemmelement (70) derart beschaffen ist, dass es in der Verriegelungsposition nach außen gegen eine auf das Grundrohr (22) aufbringbare oder auf ihm sitzende Felgenhälfte (6) drückt und diese dadurch verriegelt.

3. Felgenverriegelung (2) nach Anspruch 1 oder 2, wobei über den Umfang des Verriegelungsrohres (24) hinweg eine Mehrzahl von Klemmelementen (70) verteilt ist.

4. Felgenverriegelung (2) nach einem der vorangehenden Ansprüche, wobei das jeweilige Klemmelement (70) eine Kugel ist (32), die, vorzugsweise in einem Kugelkäfig, auf einer in ihrer radialen Ausdehnung variierenden Abrollfläche (30) des Verriegelungsrohres (24) abrollt, und wobei die Entriegelungsposition einem radial abgesenkten Zustand und die Verriegelungsposition einem radial hervorstehenden Zustand der Kugel (32) entspricht.

5. Felgenverriegelung (2) nach einem der vorangehenden Ansprüche, wobei vom Verriegelungsrohr (24) mindestens ein Betätigungselement, insbesondere ein Bolzen (50), radial nach außen absteht, das zur Wechselwirkung mit einer Abwurfschräge (52) an der zugeordneten Felgenhälfte (6) vorgesehen ist, um diese bei der Entriegelung abzuwerfen.

6. Felgenverriegelung (2) nach einem der vorangehenden Ansprüche, wobei das Verriegelungsrohr (24) durch einen an einem Anlenkhebel (60) angreifenden Betätigungszylinder (26) vom Typ Hydraulikzylinder oder Pneumatikzylinder gegenüber dem Grundrohr (22) verdrehbar ist.

7. Felgenverriegelung (2) nach einem der vorangehenden Ansprüche, wobei die untere Verriegelungseinheit (10) einen Verriegelungsmechanismus aufweist, der strukturell gleichartig und funktionsgleich zum Verriegelungsmechanismus der oberen Verriegelungseinheit (12) ist.

8. Felgenverriegelung (2) nach einem der vorangehenden Ansprüche, wobei die untere Felgenhälfte (4) nach dem Prinzip einer Bajonettverbindung mit der oberen Felgenhälfte (6) zu einer Einheit verriegelbar ist.

9. Felgenverriegelung (2) nach einem der vorangehenden Ansprüche, wobei der Zubringer (8) in zumindest einer horizontalen Richtung verfahrbar ist.

10. Anlage mit einer Messvorrichtung zur Vermessung eines Reifens, insbesondere eines Kraftfahrzeugreifens, hinsichtlich Geometrie, Gleichförmigkeit und/oder Unwucht, mit einem Zubringer (8) für aus Felgenhälften (4, 6) zusammensetzbare Messfelgen und mit einer Felgenverriegelung (2) nach einem der vorangehenden Ansprüche.

11. Anlage nach Anspruch 10, die ferner ein Felgenmagazin aufweist, wobei der Zubringer (8) zum Transport von Messfelgen vom Felgenmagazin zur Messvorrichtung und zurück ausgelegt ist.

12. Verfahren zum Betreiben einer Felgenverriegelung (2) nach einem der Ansprüche 1 bis 9 oder einer Anlage nach einem der Ansprüche 10 oder 11, wobei eine Felgenhälfte (6) auf das zugeordnete Grundrohr (22) aufgebracht wird und zur Ver- oder Entriegelung das Verriegelungsrohr (24) so weit gedreht wird, dass sich das jeweilige Klemmelement (70) von der Entriegelungsposition in die Verriegelungsposition oder umgekehrt bewegt.

13. Verfahren nach Anspruch 12, wobei die obere und die untere Felgenhälfte (4, 6) durch eine kombinierte Steck-Dreh-Bewegung relativ zueinander miteinander zu einer Einheit verriegelt oder entriegelt werden.

## Claims

1. A rim locking device (2) for a measuring device for measuring a tire, in particular a motor vehicle tire, and in particular with regard to geometry, uniformity and/or imbalance, with an upper locking unit (12) for an upper rim half (6), which locking unit is fastened to a feeder (8) which can be raised and lowered, and with a lower locking unit (10) for a lower rim half (4), which locking unit is connected or can be coupled to a rotary drive, in particular to a torque motor, wherein the upper locking unit (12) and the lower locking unit (10) can be actuated independently of one another, wherein the upper locking unit (12) has a locking tube (24) which can be rotated with respect to a base tube (22), and wherein, when rotating the locking tube (24), a number of clamping elements (70) can be moved from an unlocking position into a locking position or vice versa for locking or unlocking the associated rim half (6).

2. The rim locking device (2) according to claim 1, wherein the respective clamping element (70) is such that, in the locking position, it presses outwards against a rim half (6) which can be placed on or is seated on the base tube (22), thereby locking the rim half.

3. The rim locking device (2) according to claim 1 or 2, wherein a plurality of clamping elements (70) is distributed over the circumference of the locking tube (24).

4. The rim locking device (2) according to any one of the preceding claims, wherein the respective clamping element (70) is a ball (32) which, preferably in a ball cage, rolls on a rolling surface (30) of the locking tube (24) which varies in its radial extent, and wherein the unlocking position corresponds to a radially lowered state and the locking position corresponds to a radially protruding state of the ball (32).

5. The rim locking device (2) according to any one of the preceding claims, wherein at least one actuating element, in particular a bolt (50), projects radially outwards from the locking tube (24) and is provided for interaction with an ejection bevel (52) on the associated rim half (6) in order to eject the rim half upon unlocking.

6. The rim locking device (2) according to any one of the preceding claims, wherein the locking tube (24) can be rotated relative to the base tube (22) by an actuating cylinder (26) of the hydraulic cylinder or pneumatic cylinder type engaging a linkage lever (60).

7. The rim locking device (2) according to any one of the preceding claims, wherein the lower locking unit (10) has a locking mechanism which is structurally similar and functionally identical to the locking mechanism of the upper locking unit (12).

8. The rim locking device (2) according to any one of the preceding claims, wherein the lower rim half (4) can be locked to the upper rim half (6) according to the principle of a bayonet connection to form a unit.

9. The rim locking device (2) according to one of the preceding claims, wherein the feeder (8) is movable in at least one horizontal direction.

10. A system with a measuring device for measuring a tire, in particular a motor vehicle tire, with regard to geometry, uniformity and/or imbalance, with a feeder (8) for measuring rims which can be assembled from rim halves (4, 6), and with a rim locking device (2) according to any one of the preceding claims.

11. The system according to claim 10, further having a rim magazine, wherein the feeder (8) is designed to transport measuring rims from the rim magazine to the measuring device and back.

12. A method for operating a rim locking device (2) according to any one of claims 1 to 9 or a system according to any one of claims 10 or 11, wherein a rim half (6) is placed onto the associated base tube (22) and, for locking or unlocking, the locking tube (24) is rotated to such an extent that the respective clamping element (70) moves from the unlocking position to the locking position or vice versa.

13. The method according to claim 12, wherein the upper and lower rim halves (4, 6) are locked to form a unit or unlocked by a combined plugging-rotating movement relative to one another.

## Revendications

1. Verrouillage pour jantes (2) pour un dispositif de mesure destiné à mesurer un pneu, en particulier un pneu de véhicule automobile et à savoir en particulier en ce qui concerne la géométrie, l'homogénéité et/ou le déséquilibrage, avec une unité de verrouillage supérieure (12) fixée sur un élément d'alimentation (8) pouvant monter et descendre pour une moitié de jante supérieure (6) et avec une unité de verrouillage inférieure (10) reliée ou pouvant être couplée à un système d'entraînement, en particulier un moteur couple pour une moitié de jante inférieure (4), sachant que l'unité de verrouillage (supérieure (12) et l'unité de verrouillage inférieure (10) peuvent être actionnées indépendamment l'une de l'autre, sachant que l'unité de verrouillage supérieure (12) comporte un tube de verrouillage (24) pouvant tourner par rapport à un tube de base (22) et sachant que lors de la rotation du tube de verrouillage (24), un nombre d'éléments de serrage (70) peut être déplacé d'une position de déverrouillage à une position de verrouillage ou vice versa pour verrouiller ou déverrouiller la moitié de jante attribuée (6).

2. Verrouillage pour jantes (2) selon la revendication 1, sachant que l'élément de serrage respectif (70) est réalisé de telle manière que dans la position de verrouillage, il appuie vers l'extérieur contre une moitié de jante (6) positionnable sur le tube de base (22) ou portant sur lui et verrouille celle-ci de ce fait.

3. Verrouillage pour jantes (2) selon la revendication 1 ou 2, sachant qu'une pluralité d'éléments de serrage (70) est répartie en ce sens sur la périphérie du tube de verrouillage (24).

4. Verrouillage pour jantes (2) selon l'une quelconque des revendications précédentes, sachant que l'élément de serrage respectif (70) est une bille (32), qui roule de préférence dans une cage à bille, sur une surface de roulement (30) variant dans son extension radiale du tube de verrouillage (24) et sachant que la position de déverrouillage correspond à un état radialement diminuant et la position de verrouillage à un état de la bille (32) faisant radialement saillie.

5. Verrouillage pour jantes (2) selon l'une quelconque des revendications précédentes, sachant qu'au moins un élément d'actionnement, en particulier un axe (50), fait saillie radialement vers l'extérieur du tube de verrouillage (24), qui est prévu pour une interaction avec un chanfrein d'éjection (52) sur la moitié de jante attribuée (6) pour éjecter celle-ci lors du déverrouillage.

6. Verrouillage pour jantes (2) selon l'une quelconque des revendications précédentes, sachant que le tube de verrouillage (24) peut être tourné par rapport au tube de base (22) par un vérin d'actionnement (26), de type vérin hydraulique ou vérin pneumatique, venant en prise sur un levier articulé (60).

7. Verrouillage pour jantes (2) selon l'une quelconque des revendications précédentes, sachant que l'unité de verrouillage inférieure (10) comporte un mécanisme de verrouillage qui est structurellement de type et de fonctionnement identique au mécanisme de verrouillage de l'unité de verrouillage supérieure (12).

8. Verrouillage pour jantes (2) selon l'une quelconque des revendications précédentes, sachant que la moitié de jante inférieure (4) peut être verrouillé selon le principe d'un raccord à baïonnette à la moitié de jante supérieure (6) en une unité.

9. Verrouillage pour jantes (2) selon l'une quelconque des revendications précédentes, sachant que l'élément d'alimentation (8) peut être déplacé dans au moins une direction horizontale.

10. Installation avec un dispositif de mesure destiné à mesurer un pneu, en particulier un pneu de véhicule automobile, en ce qui concerne la géométrie, l'homogénéité et/ou le déséquilibrage, avec un élément d'alimentation (8) pour les jantes de mesure pouvant être composées de moitiés de jante (4, 6) et avec un verrouillage pour jantes (2) selon l'une quelconque des revendications précédentes.

11. Installation selon la revendication 10, qui comporte en plus un magasin de jantes, sachant que l'élément d'alimentation (8) est conçu pour le transport de jantes de mesure du magasin de jantes au dispositif de mesure et retour.

12. Procédé de fonctionnement d'un verrouillage pour jantes (2) selon l'une quelconque des revendications 1 à 9 ou d'une installation selon l'une quelconque des revendications 10 ou 11, sachant qu'une moitié de jante (6) est posée sur le tube de base attribué (22) et que le tube de verrouillage (24) est tourné pour verrouillage ou déverrouillage aussi loin que l'élément de serrage respectif (70) se déplace de la position de déverrouillage à la position de verrouillage ou vice versa.

13. Procédé selon la revendication 12, sachant que la moitié de jante supérieure et la moitié de jante inférieure (4, 6) sont verrouillées entre elles en une unité l'une par rapport à l'autre ou déverrouillées par un mouvement d'emboîtement/rotation combiné.
